# DEMANDE DE BREVET EUROPEEN

(11) **EP 1 053 820 A1**
(43) Date de publication de la demande: **22.11.2000**
(21) Numéro de dépôt: 00401382.7
(22) Date de dépôt: 19.05.2000
(51) Int. Cl.: B23K 13/04, B23K 20/06

(54) **Procédé d'assemblage par soudage de plaques dont les températures de fusion sont différentes et outil pour un tel assemblage**

(30) Priorité: 21.05.1999 FR 9906461
(71) Demandeur: Renault, 92100 Boulogne Billancourt (FR); Saet S.p.A., 10040 Leini (TO) (IT)
(72) Inventeur: Criqui, Bernard, 92510 Suresnes (FR); Bonzano, Giorgio, 10040 Leini (IT)

(57) **Abrégé**

L'invention concerne un procédé pour l'assemblage par soudage d'une première (12) et d'une deuxième (14) plaque en matériaux métalliques dont les températures de fusion sont différentes, caractérisé en ce qu'il comporte au moins une première étape de chauffage au moyen d'un outil (10) d'induction électromagnétique au cours de laquelle on chauffe localement, jusqu'à sa fusion, une zone (22) déterminée de la deuxième plaque (12) en matériau le plus réfractaire à une température légèrement supérieure à la première plaque (14) en matériau le plus fusible, et une étape consécutive d'assemblage au cours de laquelle on assemble magnétiquement les plaques (12, 14) l'une à l'autre dans la zone déterminée (22) en fusion à l'aide d'un électroaimant.

L'invention concerne aussi un outil d'induction (10) mixte pour la mise en oeuvre du procédé.

## Description

L'invention concerne un procédé d'assemblage par soudage, et un outil mixte pour la mise en oeuvre d'un tel procédé.

L'invention concerne plus particulièrement un procédé pour l'assemblage par soudage d'une première et d'une deuxième plaque en matériaux métalliques dont les températures de fusion sont différentes,

On connaît de nombreux exemples de procédés du type décrit précédemment.

Il s'agit de procédés au cours desquels la première et la deuxième plaque sont soudées à l'aide d'un outil de soudage par résistance par points ou au cours desquels la première et la deuxième plaque sont soudées à l'aide d'un outil de chauffage par induction qui permet de porter localement à sa température de fusion une zone de soudage des deux plaques.

Lorsque la zone de soudage est en fusion, les deux plaques sont assemblées une à l'autre sous une forte pression.

La mise en oeuvre de moyens d'assemblage capable d'imprimer une forte pression d'assemblage aux deux plaques est rendue nécessaire par le fait que les deux plaques présentent des irrégularités de surfaces qui rendent impossible un assemblage direct. Des moyens d'assemblage sous forte pression, notamment des moyens d'assemblage par compression ou par explosion permettent d'absorber le jeu initial qui existe entre les deux plaques.

Toutefois, de tels moyens d'assemblage sous haute pression présentent l'inconvénient de nécessiter une préparation préalable des surfaces des première et deuxième plaques qui seront destinées à former la zone de soudage, de façon à améliorer leur planéité, ce qui augmente le coût global de l'opération d'assemblage.

Par ailleurs, de tels moyens d'assemblage sous haute pression ont aussi pour inconvénient, lorsqu'ils sont employés, de soumettre les matériaux respectifs des première et deuxième plaque à des contraintes proches de leurs limites d'élasticité, ce qui a pour conséquence de fragiliser l'assemblage ainsi réalisé.

Enfin, la mise en oeuvre de tels moyens est coûteuse, non seulement du fait du prix des appareils d'assemblage sous haute pression, mais aussi du fait des longues durées d'assemblage, ce qui en fait des techniques peu appropriées à la fabrication en grande série.

Pour remédier à ces inconvénients, une fois que la zone de soudage est en fusion, il est souhaitable d'assembler les plaques l'une à l'autre par des moyens simples et peu coûteux.

Dans ce but, l'invention propose un procédé du type décrit précédemment, caractérisé en ce qu'il comporte au moins une première étape de chauffage au moyen d'un outil d'induction élèctromagnétique au cours de laquelle on chauffe localement, jusqu'à sa fusion, une zone déterminée de la deuxième plaque en matériau le plus réfractaire à une température légèrement supérieure à la première plaque en matériau le plus fusible, et une étape consécutive d'assemblage au cours de laquelle on assemble magnétiquement les plaques l'une à l'autre dans la zone déterminée en fusion à l'aide d'un électroaimant.

Selon d'autres caractéristiques de l'invention :
- lors d'une étape préliminaire, on dispose, en les empilant dans l'ordre, la première plaque en matériau le plus fusible, la deuxième plaque en matériau le plus réfractaire et l'outil d'induction,
- l'étape de chauffage au moyen de l'outil d'induction comporte l'alimentation pendant une durée de 50 ms de l'outil d'induction par un courant alternatif à haute fréquence de l'ordre de 150 kHz qui délivre progressivement une puissance de chauffage de 50kW,
- lors de l'étape consécutive d'assemblage, le courant est coupé dans l'outil d'induction, on substitue l'électroaimant à l'outil d'induction, et on alimente l'électroaimant par une décharge d'un courant continu de tension supérieure à 10kV,
- on utilise une tôle d'aluminium pour former la première plaque en matériau le plus fusible et une tôle d'acier pour former la deuxième plaque en matériau le plus réfractaire,
- on utilise un seul et même outil mixte pour constituer l'outil d'induction et l'électroaimant.

L'invention concerne aussi un outil mixte destiné à être mis en oeuvre dans le procédé objet de l'invention, qui forme outil d'induction et électroaimant pour l'assemblage par soudage d'une première et d'une deuxième plaque en matériaux métalliques présentant des températures de fusion différentes, et qui est caractérisé en ce qu'il comporte une bobine qui est alimentée par un seul dispositif d'alimentation qui délivre sélectivement un courant alternatif d'une fréquence de 150 kHz et d'une puissance de 50 kW, ou bien un courant continu d'une haute tension supérieure à 10 kV.

Selon d'autres caractéristiques de l'outil mixte :
- le dispositif d'alimentation comporte une première partie d'alimentation en courant alternatif dans laquelle le courant est amplifié par un tube triode à haute fréquence, notamment un transistor à effet de champ à semi-conducteur métal-oxyde ou un transistor bipolaire à grille isolée, qui est accordé par un circuit résonant comportant un condensateur et une self, ce circuit résonant alimentant les bornes de la bobine par l'intermédiaire d'un transformateur d'impédance,
- le dispositif d'alimentation comporte une deuxième partie d'alimentation en courant continu qui comporte un accumulateur qui est susceptible de charger un condensateur accordé en régime critique à une self, ce condensateur étant susceptible d'être déchargé aux bornes de la bobine,
- le dispositif d'alimentation comporte un interrupteur à bascule qui permet d'alimenter sélectivement la bobine avec la première ou la deuxième partie du dispositif d'alimentation.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe axiale d'un outil mixte formant outil d'induction et électroaimant selon l'invention en association avec deux têtes à assembler au moyen du procédé selon l'invention ;
- la figure 2 est un diagramme représentant l'intensité du courant du dispositif d'alimentation de l'outil mixte selon l'invention en fonction du temps ; et
- la figure 3 est un schéma électrique du dispositif d'alimentation de l'outil mixte selon l'invention.

Dans la description qui va suivre, des chiffres de référence identiques désignent des pièces identiques ou ayant des fonctions similaires.

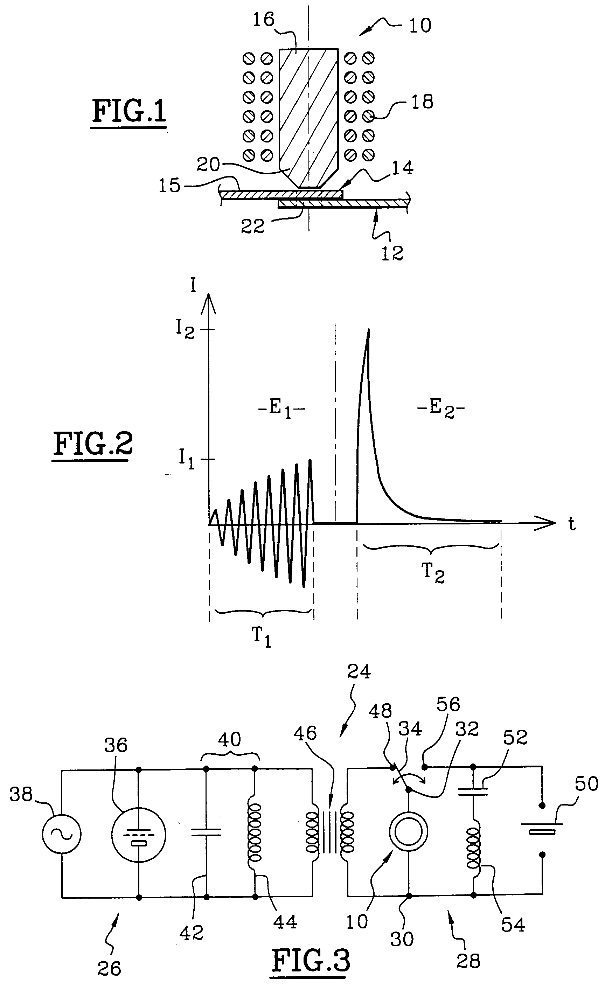

On a représenté à la figure 1 un agencement dans lequel, conformément au procédé objet de l'invention, un outil d'induction électromagnétique 10 est placé au-dessus d'une première plaque 12 et d'une deuxième plaque 14 en matériaux métalliques superposées pour réaliser leur assemblage par soudage.

La première plaque 12 et la deuxième plaque 14 présentent des températures de fusion sensiblement différentes. La première plaque 12 est par exemple réalisée en un matériau plus fusible que la deuxième plaque, notamment en aluminium, et la deuxième plaque 14 est réalisée en un matériau plus réfractaire que la première plaque 12, notamment en acier.

Conformément au procédé objet de l'invention, pour réaliser l'assemblage par soudage de la deuxième plaque 14 sur la première plaque 12, on dispose dans l'ordre, et de bas en haut comme représenté à la figure 1, la première plaque 12 en aluminium, la deuxième plaque 14 en acier, et l'outil d'induction 10.

Ainsi, la deuxième plaque 14 en matériau le plus réfractaire, c'est-à-dire ici en aluminium, est interposée entre la première plaque 12 en matériau le plus fusible, c'est-à-dire en acier, et l'outil mixte d'induction 10 de façon que la puissance de chauffage fournie par l'outil d'induction 10 provoque simultanément la fusion des matériaux des deux plaques 12 et 14, en élevant la température de la deuxième plaque 14, qui est la plus proche et la plus réfractaire, à une température légèrement supérieure à celle de la première plaque 12, qui est plus éloignée et plus fusible.

De manière connue, l'outil d'induction 10 comporte un noyau ferromagnétique 16 autour duquel est enroulé un fil spiral 18 qui forme une bobine qui est alimentée, comme on le verra ultérieurement en référence aux figures 2 et 3, par un dispositif d'alimentation pour élever la température des plaques 12 et 14 dans une zone de soudage 22.

Le noyau ferromagnétique 16 comporte une extrémité inférieure 20 sensiblement tronconique qui est destinée à approcher, sans la toucher, la face supérieure 15 de la deuxième plaque 14 en acier, de façon que l'extrémité inférieure tronconique 20 de l'outil 10 concentre la puissance calorifique de l'outil d'induction 10 dans la zone 22 de soudage des première 12 et deuxième 14 plaques.

Conformément à l'invention, le procédé d'assemblage comporte une première étape de chauffage au cours de laquelle l'outil d'induction 10 permet de réaliser la fusion de la zone de soudage 22 par induction, puis une deuxième étape consécutive d'assemblage au cours de laquelle on substitue à l'outil d'induction 10 un électroaimant qui permet d'assembler magnétiquement la première plaque 12 à la deuxième plaque 14.

Dans le mode de réalisation préféré de l'invention, l'outil d'induction électromagnétique 10 est un outil mixte qui, lors de la première étape de chauffage selon le procédé objet de l'invention, est susceptible d'être alimenté en courant alternatif pour obtenir localement la fusion de la zone 22 de soudage, et qui est susceptible, lors de la deuxième étape consécutive d'assemblage, d'être alimenté en courant continu pour fonctionner en électroaimant et réaliser l'assemblage des plaques 12 et 14 dans la zone de soudage 22 encore en fusion.

La figure 2 illustre la variation, au cours du procédé, de l'intensité du courant d'alimentation de l'outil mixte 10 en fonction du temps t écoulé. La figure 2 représente notamment l'évolution du courant I au cours de la première étape de chauffage E₁ du procédé, puis lors de la deuxième étape E₂ consécutive d'assemblage du procédé.

Lors d'une première étape E₁, le courant I est un courant alternatif à haute fréquence, sensiblement égale à 150 kHz, dont l'intensité I croît progressivement jusqu'à une amplitude maximale I₁, pendant un temps T1 d'une valeur de 50 millisecondes, de façon à fournir à l'issue de cette durée T₁, une puissance totale de chauffage de l'ordre de 50 kW. Lors de cette première étape E1, l'outil mixte 10 fonctionne en outil d'induction électromagnétique et permet d'obtenir la fusion de la zone de soudage 22.

Lors de la deuxième étape consécutive E2 d'assemblage, le courant est coupé dans l'outil d'induction 10, puis est rétabli sous la forme d'une décharge de courant continu de courte durée T₂ et d'intensité maximale I₂ qui établit à des bornes (non représentées) de l'outil mixte 10 une tension de 10 kV.

L'alimentation de l'outil mixte 10 est assuré par un seul dispositif d'alimentation 24 qui est représenté en référence à la figure 3 et qui est susceptible d'alimenter successivement l'outil mixte 10 en courant alternatif pendant la première étape E₁ de chauffage et en courant continu pendant la deuxième étape consécutive E₂ d'assemblage.

A cet effet, le dispositif d'alimentation 24 comporte une première partie 26 de circuit d'alimentation en courant alternatif et une deuxième partie 28 de circuit d'alimentation en courant continu. Une borne 30 de l'outil mixte 10 est commune aux première 26 et deuxième 28 parties de circuit. Une autre borne 32 de l'outil mixte est susceptible d'être reliée sélectivement, par un interrupteur 34 à bascule, soit à la première partie de circuit 26 d'alimentation en courant alternatif, soit à la deuxième partie de circuit 28 d'alimentation en courant continu.

La première partie 26 d'alimentation en courant alternatif comporte un tube triode 36 à haute fréquence, notamment un transistor à effet de champ à semi-conducteur métal-oxyde, qui est aussi communément connu sous le nom de transistor MOSFET, ou un transistor bipolaire à grille isolée, qui est aussi connu sous le nom de transistor IGBT.

Le tube triode 36 est alimenté par une source 38 de courant alternatif. Par ailleurs, le tube triode 36 est branché en parallèle avec un circuit résonant 40 qui comporte notamment un condensateur 42 et une self 44, et il est aussi branché en parallèle aux bornes d'un transformateur d'impédance 46 aux bornes duquel sont reliées la première borne 30 de l'outil d'induction 10 et une borne 48 de la première partie 26 qui est susceptible d'être reliée à la deuxième borne 32 de l'outil d'induction 10 par l'interrupteur à bascule 34.

La deuxième partie 28 du dispositif d'alimentation 24 comporte un accumulateur 50 qui alimente un condensateur 52 et une self 54, montés en série, qui sont accordés tout deux en régime critique. La première borne 30 de l'outil d'induction 10 est reliée à l'une des bornes de la self 54 et la deuxième borne 32 de l'outil d'induction 10 est susceptible d'être reliée, par l'interrupteur à bascule 34, à une borne 56 de la deuxième partie qui est reliée à la borne libre du condensateur 52.

De la sorte, le procédé objet de l'invention permet de réaliser, avec un seul outil mixte 10 d'induction formant aussi électroaimant, le soudage et l'assemblage de la première plaque 12 en acier à la deuxième plaque 14 en aluminium sans mettre en oeuvre de coûteux moyens d'assemblage de ces deux plaques entre elles. Le procédé objet de l'invention permet ainsi d'atteindre des temps de fabrication extrêmement courts puisque l'outil mixte 10 réalise les deux opérations de chauffage et d'assemblage.

## Revendications

1. Procédé pour l'assemblage par soudage d'une première (12) et d'une deuxième (14) plaque en matériaux métalliques dont les températures de fusion sont différentes,
caractérisé en ce qu'il comporte au moins une première étape (E₁) de chauffage au moyen d'un outil (10) d'induction électromagnétique au cours de laquelle on chauffe localement, jusqu'à sa fusion, une zone (22) déterminée de la deuxième plaque (12) en matériau le plus réfractaire à une température légèrement supérieure à la première plaque (14) en matériau le plus fusible, et une étape (E₂) consécutive d'assemblage au cours de laquelle on assemble magnétiquement les plaques (12, 14) l'une à l'autre dans la zone déterminée (22) en fusion à l'aide d'un électroaimant.

2. Procédé selon la revendication 1, caractérisé en ce que, lors d'une étape préliminaire, on dispose, en les empilant dans l'ordre, la première plaque (12) en matériau le plus fusible, la deuxième plaque (14) en matériau le plus réfractaire et l'outil (10) d'induction.

3. Procédé selon la revendication 2, caractérisé en ce que l'étape (E₁) de chauffage au moyen de l'outil d'induction (10) comporte l'alimentation pendant une durée (T₁) de 50 ms de l'outil d'induction (10) par un courant alternatif (I) à haute fréquence de l'ordre de 150 kHz qui délivre progressivement une puissance de chauffage de 50kW.

4. Procédé selon la revendication 3, caractérisé en ce que lors de l'étape consécutive (E₂) d'assemblage, le courant (I) est coupé dans l'outil (10) d'induction, en ce que l'on substitue l'électroaimant à l'outil d'induction (10), et en ce que l'on alimente l'électroaimant par une décharge (I₂) d'un courant continu de tension supérieure à 10kV.

5. Procédé selon l'une quelconque des revendications précédentes, caractérisé en ce que l'on utilise une tôle d'aluminium pour former la première plaque (12) en matériau le plus fusible et une tôle d'acier pour former la deuxième plaque (14) en matériau le plus réfractaire.

6. Procédé selon l'une quelconque des revendications précédentes, caractérisé en ce que l'on utilise un seul et même outil mixte (10) pour constituer l'outil d'induction et l'électroaimant.

7. Outil mixte (10) formant outil d'induction et électroaimant pour l'assemblage par soudage d'une première (12) et d'une deuxième plaque (14) en matériaux métalliques présentant des températures de fusion différentes,
caractérisé en ce qu'il comporte une bobine (16) qui est alimentée par un seul dispositif d'alimentation (24) qui délivre sélectivement un courant alternatif (I) d'une fréquence de 150 kHz et d'une puissance de 50 kW, ou bien un courant continu (I) d'une haute tension supérieure à 10 kV.

8. Outil mixte (10) selon la revendication 7, caractérisé en ce que le dispositif (24) d'alimentation comporte une première partie (26) d'alimentation en courant (I) alternatif dans laquelle le courant (I) est amplifié par un tube triode (36) à haute fréquence, notamment un transistor à effet de champ à semi-conducteur métal-oxyde ou un transistor bipolaire à grille isolée, qui est accordé par un circuit résonant comportant un condensateur (42) et une self (44), ce circuit résonant alimentant les bornes (30, 32) de la bobine par l'intermédiaire d'un transformateur (46) d'impédance.

9. Outil mixte (10) selon l'une des revendications 7 ou 8, caractérisé en ce que le dispositif d'alimentation (24) comporte une deuxième partie (28) d'alimentation en courant (I) continu qui comporte un accumulateur (50) qui est susceptible de charger un condensateur (52) accordé en régime critique à une self (54), ce condensateur (52) étant susceptible d'être déchargé aux bornes de la bobine (10).

10. Outil mixte (10) selon les revendications 8 et 9 prises en combinaison, caractérisé en ce que le dispositif d'alimentation comporte un interrupteur (34) à bascule qui permet d'alimenter sélectivement la bobine (10) avec la première (26) ou la deuxième partie (28) du dispositif d'alimentation (24).
